# EUROPÄISCHE PATENTSCHRIFT

(11) **EP 1 232 003 B1**
(45) Veröffentlichungstag und Bekanntmachung des Hinweises auf die Patenterteilung: **22.09.2004**
(21) Anmeldenummer: 00988727.4
(22) Anmeldetag: 20.11.2000
(51) Int. Cl.: B01J 2/16, B01J 2/00, B01J 8/38, B01J 8/44

(54) **VORRICHTUNG ZUM BESCHICHTEN VON PARTIKELN**
DEVICE FOR COATING PARTICLES
DISPOSITIF DE REVETEMENT DE PARTICULES

(30) Priorität: 22.11.1999 US 166799 P
(43) Veröffentlichungstag der Anmeldung: 21.08.2002
(73) Patentinhaber: Glatt Process Technology GmbH, 79589 Binzen (DE)
(72) Erfinder: JONES, David, M., Ramsey, NJ 07446 (US); SMITH, Richard, Andrew, Goshen, NY 10924 (US); KENNEDY, John, Patrick, Winchester, KY 40391 (US); MAURER, Frank, 79594 Inzlingen (DE); TONDAR, Matthias, Georg, 79688 Hausen i.W. (DE); LUY, Bernhard, 79102 Freiburg (DE); BAETTIG, Markus, J., CH-4450 Sissach (CH); PRASCH, Armin, 79100 Freiburg (DE)
(74) Vertreter: Pfenning, Meinig & Partner GbR
(86) Internationale Anmeldenummer: PCT/EP2000/011513
(87) Internationale Veröffentlichungsnummer: WO 2001/037980

(56) Entgegenhaltungen:
- EP-A- 0 172 530
- WO-A-93/08923
- US-A- 3 386 182
- PATENT ABSTRACTS OF JAPAN vol. 1999, no. 05, 31. Mai 1999 (1999-05-31) -& JP 11 033386 A (KAWASAKI HEAVY IND LTD), 9. Februar 1999 (1999-02-09)

## Beschreibung

Die Erfindung betrifft eine Vorrichtung zum Beschichten von Partikeln nach dem Oberbegriff des Hauptanspruchs.

Aus der Europäischen Patentschrift EP 0 570 546 B1 ist ein solcher Wirbelschichtreaktor bekannt und er dient zum Beschichten von Partikeln oder kleinen Pastillen, die in einem Behälter mittels eines von unten nach oben gerichteten Luft- oder Gasstrom (z.B. Stickstoff) zirkulieren, wobei die Partikel durch einen senkrecht nach oben gerichteten Strahl eines flüssigen Beschichtungsmaterials geführt werden. Mit dem Zirkulieren der Partikel durch den Strahl wird jeweils eine geringe Menge von Beschichtungsmaterial auf der Oberfläche der Partikel abgelagert, wobei die Anzahl der Umläufe der Partikel die Schichtdicke bestimmt.

Eine solche Beschichtungsvorrichtung nach dem Stand der Technik arbeitet zufrieden stellend, wenn die Partikel fein und leicht sind. Wenn jedoch die Partikel größer sind, wie beispielsweise Tabletten oder dergleichen, hat es sich herausgestellt, dass die Beschichtung ungleichmäßig wird, da die schwereren Tabletten nicht gleichmäßig durch den Behälter zirkulieren. Die Beschichtungsvorrichtung nach dem Stand der Technik kann nicht für Anwendungen benutzt werden, die eine gleichmäßige, voraussagbare Schichtdicke aller Tabletten in einer Charge verlangen. Darüber hinaus besteht die Gefahr, dass die Tabletten aufgrund der hohen Geschwindigkeiten beim Zirkulieren gegen Hindernisse stoßen und beschädigt werden. Da die Wirkstoffe in den Tabletten genau dosiert sind, ist es nicht akzeptabel, dass die Tabletten aufgrund von Beschädigungen und Abrieb einen Teil ihres Wirkstoffes verlieren.

JP 11-33386 A betrifft eine Beschichtungsvorrichtung mit einem Behälter, in dessen Boden eine Prozessluftdüse mit mehreren Luftauslässen 12 angeordnet ist. Oberhalb der Luftdüse mit Abstand zu ihr ist ein Steigrohr vorgesehen, in dem Partikel nach oben transportiert werden. Weit über dem oberen Ende des Stützrohrs ist eine Sprühdüse in das Innere des Behälters eingesetzt, die Beschichtungsmaterial in das Innere des Behälters auf die aufsteigenden Partikel sprüht. Dadurch erhöhen die Partikel ihr Gewicht, und fallen außerhalb des Steigrohres nach unten. Auf etwa halber Höhe des Steigrohres werden im oberen Teil des Behälters austretende Partikel mittels eines Gasstroms von einem Ejektor tangential wieder zugeführt. Außerdem wird über eine schräg angeordnete, durchlöcherte Wand im unteren Teil des Behälters tangential Luft eingeströmt, wobei die tangential einströmende Luft auf das Steigrohr gerichtet ist. Diese tangential einströmende Luft dient unter anderem dazu, durch Kollidieren und Zerbrechen der Partikel eine Partikelgrößenregulierung durchzuführen.

Der Erfindung liegt daher die Aufgabe zugrunde, eine Vorrichtung zum Beschichten von Partikeln zu schaffen, mit der auch große Partikel mit unterschiedlichen geometrischen Formen, die auch Ecken und Kanten aufweisen können, z.B. Tabletten, in schonender Weise und mit gleichmäßiger Schichtdicke beschichtet werden, wobei die Formbeständigkeit der Partikel bzw. Tabletten erhalten bleiben soll.

Diese Aufgabe wird erfindungsgemäß durch die kennzeichnenden Merkmale des Hauptanspruchs in Verbindung mit den Merkmalen des Oberbegriffs gelöst.

Dadurch, dass Mittel zur Stützgaszufuhr in der Nähe des gelochten Anströmbodens vorgesehen sind, die einen Stützgasstrom mit mindestens einer seitlich von außen nach innen gerichtete Strömungskomponente in Richtung des Spaltes zur Bildung einer Gasgleitschicht und/oder daß Mittel zum konstruktiven Ausformen im unteren Bereich des Behälters angeordnet sind, die einen Übergangskanal zwischen Rückführzone und Beschichtungszone mit im Wesentlichen stetigen Begrenzungsflächen bilden, werden die Partikel, d.h. die Tabletten in einem gerichteten Partikelfluß geführt und es wird ein Aufprallen der Tabletten an Hindernissen weitgehend vermieden, wodurch die Tabletten in schonender Weise transportiert werden, so daß keine Beschädigungen auftreten. Es können auch Partikel mit geringerer mechanischer Stabilität und solche mit Ecken und Kanten beschichtet werden. Aufgrund der Mittel zum konstruktiven Ausformen, d.h. durch in den unteren Bereich eingesetzte Einbauten, schließt sich an die Rückführzone quasi ein Übergangskanal in die Beschichtungszone an, wobei die Begrenzungsflächen dieses Übergangskanals zumindest teilweise von den Umfangsflächen der Mittel zum konstruktiven Ausformen zusammen mit dem Anströmboden und den Begrenzungswänden des Behälters, aber auch durch die Gasgleitschicht gebildet werden, die von dem zugeführten Stützgasstrom geliefert wird.

Weiterhin werden sowohl durch die Mittel zum konstruktiven Ausformen als auch durch den von den Mitteln zur Stützgaszufuhr gelieferten Gasstrom sogenannte Toträume vermieden, an denen sich Tabletten sammeln könnten, so daß eine gleichmäßige Zirkulation der Tabletten durch die Beschichtungszone und damit eine über die Tabletten der Charge gleichmäßige Beschichtung gewährleistet wird.

Durch die in den Unteransprüchen angegebenen Maßnahmen sind vorteilhafte Weiterbildungen und Verbesserungen möglich.

Besonders vorteilhaft ist, daß um die Sprühdüse herum ein rampenförmiger Körper angeordnet ist, der perforiert ist und der einerseits Bestandteil der Mittel zum konstruktiven Ausformen des unteren Bereichs des Behälters zu dem Übergangskanal und andererseits Bestandteil der Mittel zur Stützgaszufuhr ist. Durch die Perforierung des rampenförmigen Körpers durch die in diesem Bereich zugeführte Prozeßluft wird eine vertikale Stützluft so ausgebildet, daß die Tabletten in dem Übergangskanal an der rampenförmigen Umfangsfläche entlang wie auf einem Luftkissen geführt werden. Es wird ein direktes Aufprallen der Tabletten auf den Schaft der Sprühdüse verhindert.

Vorzugsweise leiten die Mittel zur Stützgaszufuhr den Stützgasstrom mit seitlich gerichteter Strömungskomponente am unteren Ende des Behälters benachbart zum Anströmboden ein, wodurch eine horizontale Stützluft (im Falle von Luft als Gas) gebildet wird, die verhindert, daß die Tabletten an nicht ausreichend von unten angeströmten Bereichen des Anströmbodens liegen bleiben, und um gleichzeitig zusätzlich sicherzustellen, daß die Tabletten über den Anströmboden wie auf einer Luftgleitschicht von außen nach innen zur Beschichtungszone hin transportiert werden. Zusätzlich ist es vorteilhaft, daß der Bereich, in dem die Anströmöffnungen angebracht sind, gleichzeitig noch leicht geneigt bzw. konusförmig oder auch bogenförmig als Ring ausgebildet wird, wodurch ein angepaßter Übergang von der Neigung der Behälterwand hin zum Anströmboden geschaffen wird, an dem die Tabletten leichter abfließen und dadurch gut von außen nach innen transportiert werden. Die Versorgung für die horizontale Stützluft kann durch externe Druckluft oder auch durch im Bypass geführte Teil-Prozeßluft erfolgen, wobei im ersteren Fall gegebenenfalls eine flexiblere Prozeßführung durch die Möglichkeit der Regelung der Luftmenge, Temperatur und des Drucks gegeben ist, während im zweiten Fall vorteilhafterweise keine zusätzliche Überwachung der resultierende Produktqualität durch eine homogene Reinheit des Haupt- und Teil-Prozeßstroms, die gemeinsam erzeugt und behandelt werden, notwendig ist.

In vorteilhafter Weise ist an dem unteren Ende des Steigrohrs ein Ansatz oder eine "Schürze" angeordnet, deren Umfangsfläche in Strömungsrichtung der Tabletten geneigt ist. In seinem dem Anströmboden zugewandten Bereich des Ansatzes ist die Umfangsfläche horizontal oder in Richtung der Beschichtungszone geneigt oder bogenförmig ausgebildet. Dadurch wird die Fließrichtung der Tabletten in die Rückführzone so angepaßt, daß sich diese leichter und geführt in Richtung der Beschichtungszone bewegen und daß es nicht zu einem Rückstau in der Rückführzone oder auf dem äußeren Rand des Anströmbodens kommt. Dies wird auch dadurch erreicht, daß die Querschnittsverengung im Bereich der Rückführzone zu einer Erhöhung der Gasgeschwindigkeit führt, die wiederum gegenüber dem oberen Bereich der Rückführzone zu einer partiellen Auflockerung der Rückführzone führen kann, wodurch sich die Tabletten besser in Fließrichtung ausrichten können, und diese leichter insbesondere durch den Spalt zwischen Anströmboden und Steigrohr transportiert werden. Bei der bogenförmigen Ausbildung der Umfangsfläche bzw. bei einem tropfenförmigen Querschnitt ergibt sich hinsichtlich der Strömung eine venturiähnliche Wirkung zur Beschichtungszone hin.

Vorteilhaft ist auch, wenn das durch den Anströmboden in den Behälter strömende Prozeßgas für die Beschichtungszone und für die Rückführzone in getrennten Teilanströmkanälen zugeführt wird, da das jeweils zugeführte Prozeßgas dann unterschiedlich eingestellt, überwacht und geregelt werden kann.

Dadurch, daß in den Anströmboden eine mit einem Austragkanal verbundene Austragöffnung zum Austragen der beschichteten Tabletten vorgesehen ist, die mit einem bewegbaren Verschlußorgan abgedeckt ist, können in einfacher und schonender Weise die Tabletten aus dem Behälter entfernt werden.

Ausführungsbeispiele der Erfindung sind in der Zeichnung dargestellt und werden in der nachfolgenden Beschreibung näher erläutert. Es zeigen:
- Fig. 1: einen Schnitt durch ein Ausführungsbeispiel der erfindungsgemäßen Vorrichtung,
- Fig. 2: eine vergrößerte Darstellung eines Teils der Vorrichtung nach Fig. 1,
- Fig. 3: eine Aufsicht auf die Vorrichtung zur Stützgaszufuhr,
- Fig. 4: einen Schnitt durch die Vorrichtung zur Stützgaszufuhr,
- Fig. 5: einen Schnitt durch den Düsenmantel,
- Fig. 6: eine Ansicht eines Rampenkörpers,
- Fig. 7: eine Aufsicht auf den Rampenkörper,
- Fig. 8: einen Schnitt durch ein erstes Ausführungsbeispiel des Ansatzes,
- Fig. 9: einen Schnitt durch ein zweites Ausführungsbeispiel des Ansatzes,
- Fig. 10: eine Ansicht auf ein weiteres Ausführungsbeispiel der erfindungsgemäßen Beschichtungsvorrichtung,
- Fig. 11: eine Schnittansicht auf ein noch anderes Beispiel der erfindungsgemäßen Beschichtungsvorrichtung,
- Fig. 12: eine Ansicht von unten entsprechend Fig. 11,
- Fig. 13: eine Austragvorrichtung in einer ersten Stellung,
- Fig. 14: eine Austragvorrichtung in einer zweiten Stellung.

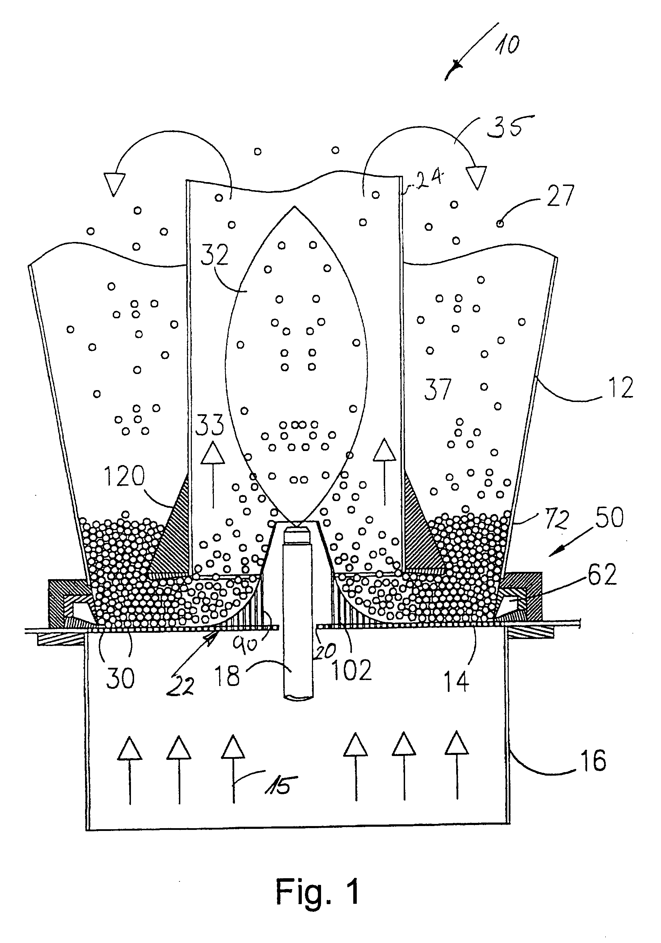

In Fig. 1 ist ein Schnitt durch ein Ausführungsbeispiel der Vorrichtung zum Beschichten von Partikeln, beispielsweise von Tabletten, dargestellt. Die Vorrichtung zum Beschichten 10 weist einen Behälter 12 mit konischen Umfangswänden 72 auf, dessen Boden durch eine als Anströmboden 14 dienende Lochplatte ausgebildet ist. In dem Behälter 12 ist mittig ein im Wesentlichen zylindrisches Stützrohr 24 mit Abstand zum Anströmboden 14 angeordnet, wobei eine Sprühdüse 18, die eine zentrale Öffnung 20 des Anströmbodens 14 durchgreift, in das Innere des Stützrohres 24 gerichtet ist und über einen angedeuteten Sprühstrahl 32 Beschichtungsmaterial einsprüht. Der Anströmboden 14 ist gasdicht mit einem Anströmkanal 16 zum Zuführen von Prozeßgas 15 verbunden.

Der als Lochplatte ausgebildete Anströmboden 14 weist eine Vielzahl von Löchern 30 auf, die so angeordnet sind, daß das Prozeßgas 15, das beispielsweise Luft, Stickstoff oder dergleichen sein kann, aus dem Anströmkanal 16 durch die Löcher 30 in den Produktbehälter 12 strömen kann, um ein Wirbelbett zu erzeugen, wie später beschrieben wird.

In dem Behälter sind zu beschichtende Partikel bzw. Tabletten 27 angeordnet, die sich durch eine im Inneren des Stützrohres 24 ausgebildete Beschichtungszone 33 und eine zwischen Stützrohr 24 und Wand 72 des Behälters 12 ausgebildete Rückführzone 37 bewegen. Vorzugsweise ist die Porosität des als Lochplatte ausgebildeten Anströmbodens 14 jeweils an die Beschichtungszone 33 und die Rückführzone 37 angepaßt, d.h. die Anzahl, Anordnung und Größe der Löcher 30 sind jeweils so gewählt und angeordnet, daß im Bereich der Beschichtungszone 33 ein großes Gasvolumen aus dem Anströmkanal 16 in den Behälter, d.h. in das Stützrohr 24 mit relativ hoher Geschwindigkeit strömt, und im Bereich der Rückführzone 37 ein ausreichender Gasstrom zugeführt wird, um die Partikel 27 in einem derart aufgelockerten bzw. fließfähigen Zustand zu halten, daß die Partikel sich aufgrund der Schwerkraft möglichst einzeln entgegen der Prozeßluft in Richtung des Anströmbodens nach unten bewegen und nicht agglomerieren können.

Zum Beschichten werden die Partikel bzw. Tabletten 27 in dem Behälter angeordnet und es wird gefilterte Prozeßluft bzw. Prozeßgas 15 über nicht dargestellte Gebläse oder Druckgasquellen zugeführt, üblicherweise besteht ein Unterdruck in dem Behälter 12 und in einer sich daran anschließenden Entspannungskammer, so daß Prozeßluft 15 durch den Anströmboden gezogen wird. Diese sowohl in die Beschichtungszone als auch die Rückführzone einströmende Prozeßluft fluidisiert die Partikel 27 und es wird die durch die Mittelöffnung 20 durchgreifende Sprühdüse 18 aktiviert, um einen gesteuerten Sprühstrahl 32 in das Stützrohr 24 zu sprühen. Dabei wird das Beschichtungsmaterial mit hoher Geschwindigkeit und unter Druck, deren Höhe abhängig von der Art und Größe der zu beschichtenden Partikel 27, von der Art des Beschichtungsmaterials und der gewünschten Beschichtungseigenschaften ist, injiziert. Im Bereich der Beschichtungszone 33 steigen die Partikel 27 mit hoher Geschwindigkeit, die durch den Prozeßgasstrom und durch den Sprühstrahl gegeben ist, in dem Stützrohr 24 hoch, wobei sie mit den Zerstäubungströpfchen der Beschichtungsflüssigkeit in Kontakt kommen und beschichtet werden, bevor sie am Ende des Stützrohres 24 in der Entspannungszone entsprechend Pfeil 35 radial nach außen gezwungen werden. Sobald sie aus dem Einfluß der nach oben gerichteten Gasströmung kommen, fallen die Partikel bzw. Tabletten 27 durch die Schwerkraft in der Rückführzone 37 nach unten, wobei sie aufgrund des Differenzdruckes zwischen Beschichtungszone 33 und Rückführzone 37 in der im unteren Bereich des Behälters ausgebildeten "Übergangszone" in die Beschichtungszone 33 zurückgezogen werden. Auf diese Weise zirkulieren die Partikel oder Tabletten 27 mehrfach durch die Beschichtungszone 33 und die Rückführzone 37, wobei in der Aufwärtsbewegung beschichtet und angetrocknet wird und in der Abwärtsbewegung das Beschichtungsmaterial zu Ende getrocknet wird.

Um den Partikelstrom zwischen der Rückführzone 37 und der Beschichtungszone 33 zu kanalisieren, sind Mittel zum konstruktiven Ausformen des unteren Bereichs des Behälters 12 und/oder Mittel zum Zuführen von Stützgas vorgesehen, die einzeln oder gemeinsam einen Übergangskanal zwischen Rückführzone 37 und Beschichtungszone 33 mit im Wesentlichen stetigen Begrenzungsflächen bilden, wobei die Begrenzungsflächen auch durch Gasgleitschichten in nicht körperlicher Weise realisiert sein können. Wie in Fig. 1 dargestellt ist, bestehen die Mittel zum konstruktiven Ausformen und die Mittel zum Zuführen von Stützgas aus einem Ansatz 120 an bzw. auf dem unteren Ende des Stützrohres 24, aus einer Düsenrampe 22 und einer Gaszufuhreinrichtung 50, die am unteren Umfang des Behälters 12 vorgesehen ist. Weitere Maßnahmen zum Auskleiden des Ring-Übergangskanals zwischen Rückführzone 37 und Beschichtungszone 33 sind denkbar.

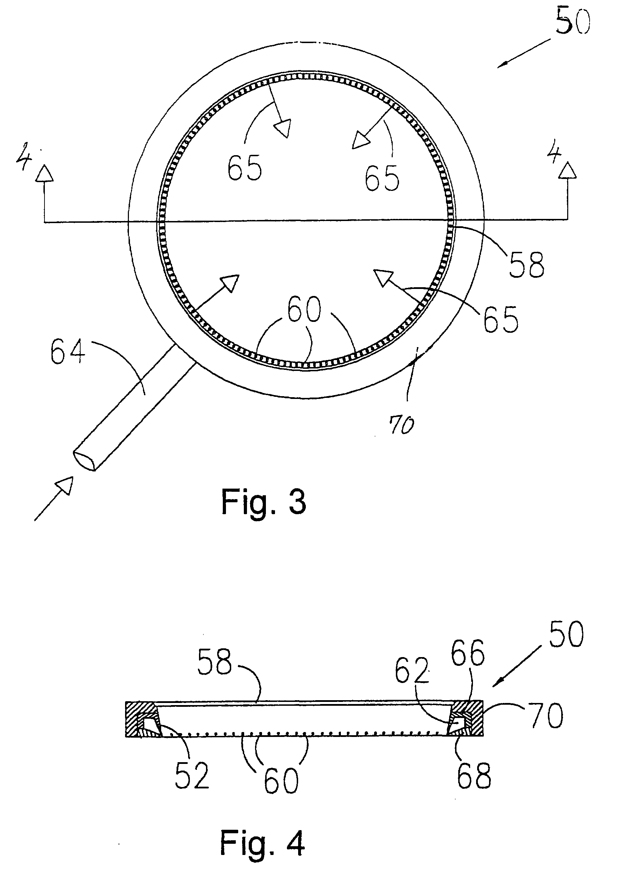

Im Folgenden werden die erwähnten Mittel zum konstruktiven Ausformen und zur Zufuhr von Stützgas näher beschrieben. Wie auch aus den Fign. 3 und 4 zu erkennen ist, weist die Gaszufuhreinrichtung 50 einen ringförmigen Gaskanal 62 auf, der von einem auf dem Anströmboden 14 angeordneten Dichtring 68 und einem nach unten offenen Kanalring 66 gebildet wird. Kanalring 66 und Bodenabdichtring 68 werden von einem Außenring 70 übergriffen und die gesamte Anordnung stützt sich auf dem Anströmboden 14 ab und umgreift den unteren Teil des Behälters 12 bzw. ist Bestandteil der Begrenzungswand des Behälters 12. Dazu ist der Außenring 70 mit einer umfänglichen Nut 58 am inneren Umfang versehen, wobei das untere Ende der Behälterwand 72 in diese Umfangsnut 58 eingreift. Wie aus Fig. 4 und Fig. 1 zu erkennen ist, ist der innere Schenkel 52 des Kanalringes 66 schräg ausgebildet, so daß eine Verlängerung der Behälterwand 72 ohne Sprünge gegeben ist. Die untere an dem unteren Ende des Innenschenkels sind Öffnungen 60 über den Umfang herum, vorzugsweise in gleichmäßigem Abstand zueinander angeordnet sind, die radial nach innen gerichtet sind. Ein Zufuhrrohr 64 steht mit dem Ringkanal 62 in Verbindung, so daß unter Druck über das Zufuhrrohr 64 zugeführtes Gas bzw. zugeführte Luft gleichmäßig über die Mehrzahl von Öffnungen 60 radial nach innen strömt, was in Fig. 3 durch die Pfeile 65 angedeutet ist. Die in Fig. 4 dargestellte Ringanordnung kann in einfacher Weise auseinander genommen werden, um eine Reinigung zu gestatten.

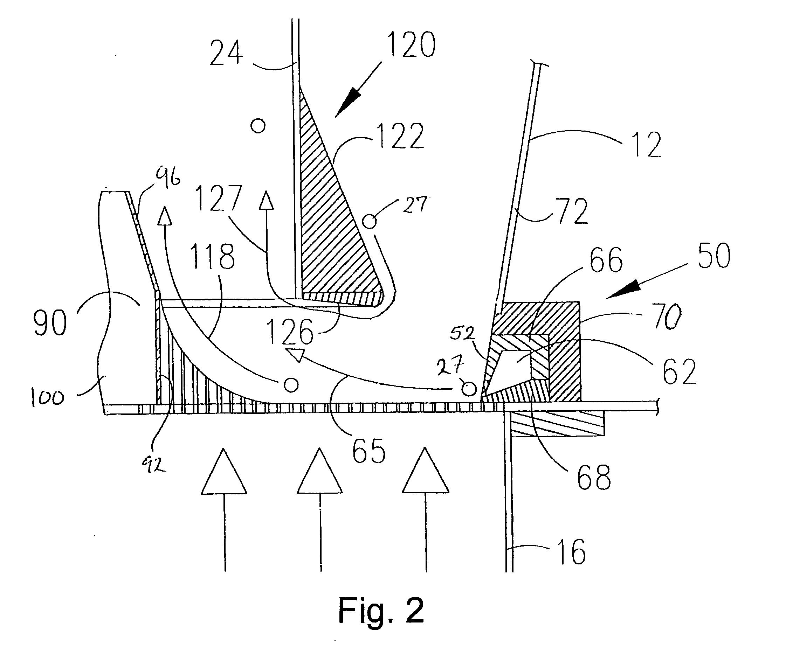

In Fig. 2 ist die Ringanordnung nach Fig. 3 und 4 im eingebauten Zustand genauer dargestellt, wobei zu erkennen ist, daß ein radial nach innen gerichteter Gasstrom 65 über die Öffnungen 60 in den Behälter eingeblasen wird, wodurch Totzonen vermieden werden, da alle Tabletten 27, die im Übergangsbereich zwischen Behälterwand 72 und Anströmboden 14 vorgesehen sind, nach innen zur Sprühdüse 18 hin bzw. zur Beschichtungszone 33 hin gezwungen werden. Dabei können das Volumen und die Geschwindigkeit des Gases, das über die Öffnungen 60 eingeblasen wird, entsprechend den Gegebenheiten der Tabletten und der Änderungen der Strömungseigenschaften der Tabletten aufgrund der unterschiedlichen Beschichtungsphasen gesteuert werden. Aufgrund der Gaseinströmung über die Öffnungen 60 wird eine Gasgleitschicht gebildet, die horizontal nach innen gerichtet ist und die unteren Tabletten der Rückführzone 37 werden entsprechend dem Pfeil 65 radial nach innen bewegt, um Raum für andere Tabletten 27 der Rückführzone zu machen. Dabei arbeitet der horizontal nach innen gerichtete Luftstrom mit dem durch die Öffnungen 30 des Anströmbodens hindurchtretenden Prozeßgasstrom zusammen.

In Fig. 2 ist die ins Innere des Behälters gerichtete Fläche des Schenkels 52 schräg ausgebildet. Selbstverständlich kann sie auch bogenförmig ausgebildet sein, um einen stetigen Übergang zu dem Anströmboden zu gewährleisten.

Die Öffnungen 60 des umlaufenden Strömungskanals 62 sind in Fig. 3 und 4 als runde Öffnungen ausgebildet, sie können auch schlitzförmig sein oder es kann auch ein Umfangsschlitz vorgesehen sein.

Die Gaszufuhr über das Zufuhrrohr 64 ist unabhängig von der Zufuhr des Prozeßgases 15 über den Anströmkanal 16, wodurch eine gute Einstellbarkeit der Strömungsparameter entsprechend den Prozeßparametern gegeben ist. Es ist jedoch auch möglich, den Stützgasstrom über die Zufuhreinrichtung 50 von dem Prozeßgas abzuzweigen.

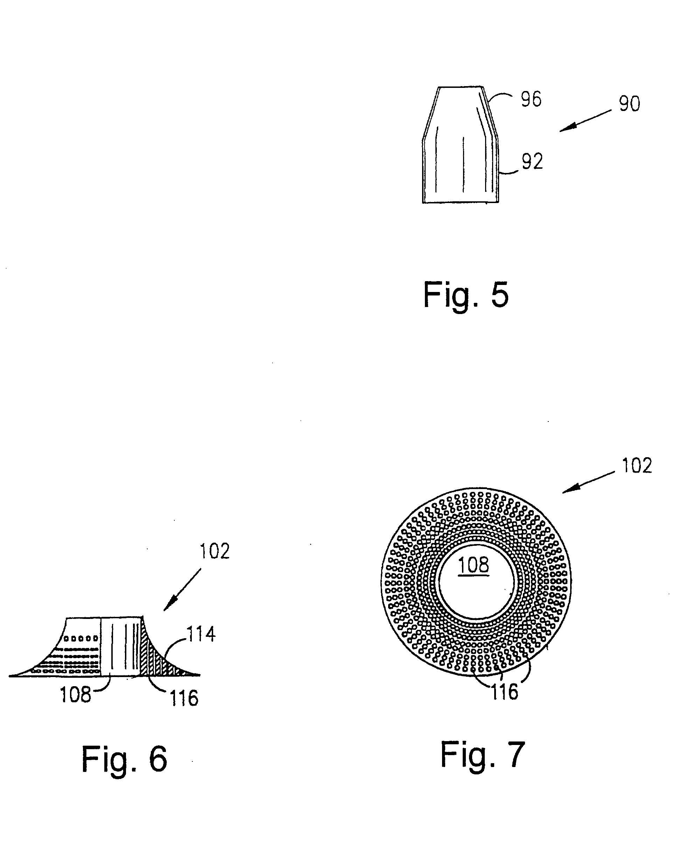

Die in Fig. 1 zu erkennende Düsenrampe 22 ist näher in den Fign. 2, 5, 6, 7 dargestellt. Die Düsenrampe 22 verhindert, daß die aufgrund des starken Unterdrucks im Bereich der Beschichtungszone 33 aus der Rückführzone 37 nach innen gesaugten Tabletten 27 durch die vorhandene horizontale Komponente der Bewegung, insbesondere bei schweren und großen Tabletten, gegen die Düse stoßen und beschädigt werden. Entsprechend den Fign. 5 bis 7 besteht die Düsenrampe aus einem in Fig. 5 dargestellten Düsenmantel 90 und einem in Fig. 6 und 7 dargestellten Lochkörper 102. Der Düsenmantel 90 ist hohl und umfaßt einen im Wesentlichen zylindrischen Basisteil 92 und einen kegelstumpfförmigen oberen Teil 96. Die Sprühdüse 18 durchgreift mittig den Düsenmantel, wobei zwischen Düse 18 und Düsenmantel ein Abstand verbleibt, derart, daß durch die Öffnungen 30 des Anströmbodens 14 strömendes Prozeßgas durch das Innere des Düsenmantels 90 geleitet wird. Das obere Ende des Düsenmantels 90 kann so geformt werden, daß das daraus austretende Gas zur Formung des Sprühstrahls 32 beiträgt. In einer anderen Ausführungsform kann das obere Ende so ausgebildet sein, daß die Düse 18 dicht abschließend aufgenommen wird, so daß kein Gas oder nur eine geringe Menge durch den Düsenmantel 90 strömt.

Der Lochkörper 102 gemäß Fign. 6 und 7 weist eine bogenförmige Umfangsfläche 114 als Rampenfläche, ähnlich einem Hut auf, wobei die dem Anströmboden 14 zugewandte Fläche einen größeren Durchmesser hat als die dem Stützrohr 24 zugewandte obere Fläche. Weiterhin ist der Lochkörper 102 mit einer zylindrischen Durchgangsöffnung 108 versehen.

Wie in Fig. 1 gezeigt wird, ist die Düsenrampe 22 zentrisch auf dem Anströmboden 14 angeordnet, wobei eine stetige Übergangsfläche zwischen Anströmboden und Umfangsfläche 114 des Lochkörpers 102 gebildet wird. Der Lochkörper 102 umgreift den Düsenmantel 90, der in der mittleren Durchgangsöffnung 108 aufgenommen ist, derart, daß sich die rampenförmige Umfangsfläche 114 des Lochkörpers 102 im Wesentlichen durch die konische Umfangsfläche des oberen Teils 96 des Düsenmantels 90 fortsetzt. Selbstverständlich kann auch ein integrales Teil, bestehend aus Lochkörper und Düsenmantel, vorgesehen sein, wobei es denkbar ist, daß der untere Teil 92 des Düsenmantels 90 weggelassen wird.

Der Lochkörper 102 weist eine Mehrzahl von senkrecht angeordneten Durchgangsbohrungen 116 auf, die entsprechend Fig. 7 vorzugsweise in konzentrischen Ringen angeordnet sind. Die Durchgangsbohrungen 116 haben vorzugsweise solche Abmessungen, daß sie mit den entsprechenden Öffnungen 30 des als Lochplatte ausgebildeten Anströmbodens 14 ausgerichtet werden können, so daß das durch die Öffnungen 30 aus dem Anströmkanal strömende Prozeßgas 15 frei durch die ausgerichteten Durchgangsbohrungen der Düsenrampe 22 hindurchströmen kann und an dem oberen Ende der jeweiligen Durchgangsbohrung 116 entlang der bogenförmigen Rampenoberfläche 114 an unterschiedlichen Höhen austreten kann. Die Durchgangsbohrungen 116 können gleich oder größer als die entsprechenden Öffnungen 30 des Anströmbodens 14 sein, wodurch der Prozeßgasstrom in den Durchgangsbohrungen 116 gesteuert werden kann.

Der Zweck der Düsenrampe 22 liegt darin, Prozeßgas aus dem Anströmkanal 16 längs einer gekrümmten kreisbogenförmigen Rampenoberfläche 114 zu richten, so daß die sich schnell bewegenden, horizontal angetriebenen Tabletten 27 durch das gebildete Luftkissen oder die gebildete Luftgleitschicht in die vertikale Richtung abgelenkt zu werden. Die Verwendung der Düsenrampe 22 minimiert ein unerwünschtes Anstoßen der Tabletten 27 gegen ein Hindernis, da sie entsprechend dem Pfeil 118 in Fig. 2 in kontinuierlichen Bewegungen in die Beschichtungszone zurück geleitet werden.

Gegebenenfalls kann die Düsenrampe 22 so ausgebildet sein, daß nicht Durchgangsbohrungen 116 in einem Formkörper vorgesehen sind, sondern daß die Düsenrampe insgesamt hohl ausgebildet ist, und nur Durchgangslöcher in ihrem Umfang ausgestanzt sind.

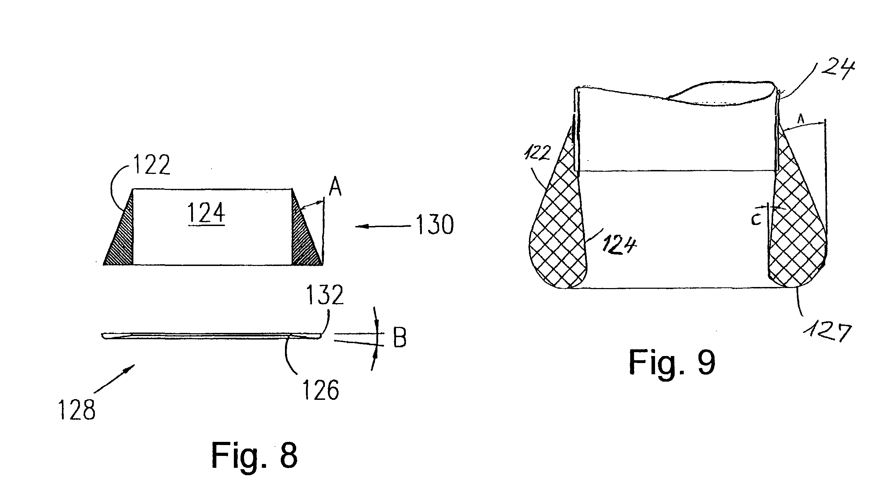

Die in der Rückführzone 37 sich befindenden Tabletten 27 bewegen sich z.B. mit einer Geschwindigkeit von einem Meter in 10 bis 30 Sekunden nach unten. Wenn diese Tabletten 27 in die Beschichtungszone hereingezogen werden, werden sie als Beispiel auf ungefähr 5 bis 10 Meter pro Sekunde beschleunigt, wobei diese relativ plötzliche Geschwindigkeit in Stand der Technik eine große Übergangsbelastung auf die relativ geringe Stabilität aufweisenden Tabletten 27 ausübt. Um diese Belastungen zu verringern ist entsprechend Fig. 1 auf bzw. an dem unteren Ende des Stützrohres 24 ein Ansatz 120 vorgesehen, durch den die auf die Tabletten ausgeübten Belastungen durch die plötzliche Änderungen verringert wird. In dem in Fig. 1 dargestellten Ausführungsbeispiel ist der Ansatz 120 als ringförmiger Konus 130 ausgebildet, der eine mit einem Winkel A zur Vertikalen geneigte Umfangsfläche 122 aufweist. Dies ist genauer in Fig. 8 gezeigt. Der Konus 130 ist mit einer inneren zylindrischen Bohrung 124 versehen, um das untere Ende des Stützrohres 24 aufzunehmen, an dem es befestigt ist.

In der Ausführungsform nach Fig. 8 besteht der Ansatz 120 aus zwei Elementen, dem Konus 130 und einem mit dem Konus 130 verbundenen Ring 128. Die untere, dem Anströmboden 14 zugewandte Fläche 126 des Ansatzes 120 bzw. des Ringes 128 ist vorzugsweise entsprechend Winkel B nach innen geneigt, um die sich in der Nähe befindenden Tabletten 27 zu beschleunigen. Dabei ist der äußere Rand 132 des Ringes 128 abgerundet. Der Winkel B wird abhängig von der Größe, der Form und dem Gewicht der Tabletten 27 sowie den Abmessungen des Behälters und den Beschichtungseigenschaften und anderen Größen gewählt. Durch die geteilte Form des Ansatzes können entsprechend den unterschiedlichen Anforderungen unterschiedliche Ringe 128 mit unterschiedlicher Neigung der Fläche 126 vorgesehen werden. Selbstverständlich kann der Ansatz auch als ein integrales Teil gebildet sein.

In Fig. 9 ist ein anderes Ausführungsbeispiel für einen Ansatz 120 dargestellt, in dem das untere Ende des Stützrohres 24 eingesetzt ist. Dieser Ansatz weist einen etwa tropfenförmigen Querschnitt auf, d.h. die schräge Umfangsfläche 122 verlängert sich bogenförmig in Richtung Beschichtungszone und die der Beschichtungszone 33 zugewandte Innenfläche der Durchgangsöffnung 124 ist leicht in einem Winkel C geneigt. Dadurch wird eine venturiähnliche Wirkung erzielt. Die durch den Bogen am unteren Ende des tropfenförmigen Ansatzes vorgegebenen Winkel (Tangente an die Umfangsfläche) werden entsprechend den Betriebsgrößen und -parametern gewählt. Die mit A in Fign. 8 und 9 bezeichneten Winkel können zwischen 1° und 50°, vorzugsweise 10° bis 35° liegen, während der Winkel C zwischen 1° und 15° beträgt.

Die in der Rückführzone 37, insbesondere in der Nähe des Ansatzes 120 sich befindenden Tabletten 27 werden durch die geneigte Oberfläche 122 schräg abgelenkt, bis sie die bogenförmige 127 bzw. untere Fläche 126 erreichen und werden aufgrund der Druckdifferenz beschleunigt. Die bogenförmige Umfangsfläche 127 entsprechend Fig. 9 und die geneigte Fläche 122 entsprechend Fig. 8 tragen zu einer gleichmäßigeren Beschleunigung bei, so daß die Belastungen auf die Tabletten geringer gehalten werden. Die Umfangsflächen bilden auch einen Teil der stetigen Begrenzungsflächen des durch den Ansatz 120, die schräge Behälterwand 72, gegebenenfalls einer bogenförmigen oder geneigten Innenwand des Schenkels 52 der Stützgaszufuhrvorrichtung, sowie den Anströmboden 14 und die Düsenrampe 22 gebildeten Übergangskanal. Die sich unter dem Ansatz 120 befindenden Tabletten 27 werden leichter durch das durch den Anströmboden 14 strömende Prozeßgas angehoben, da eine geringere nach unten gerichtete Kraft auf sie ausgeübt als im oberen Bereich der Rückführzone 37. Das Ergebnis ist, daß die Tabletten leichter und belastungsärmer von der Rückführzone 37 durch den Übergangskanal in die Beschichtungszone 33 geleitet werden.

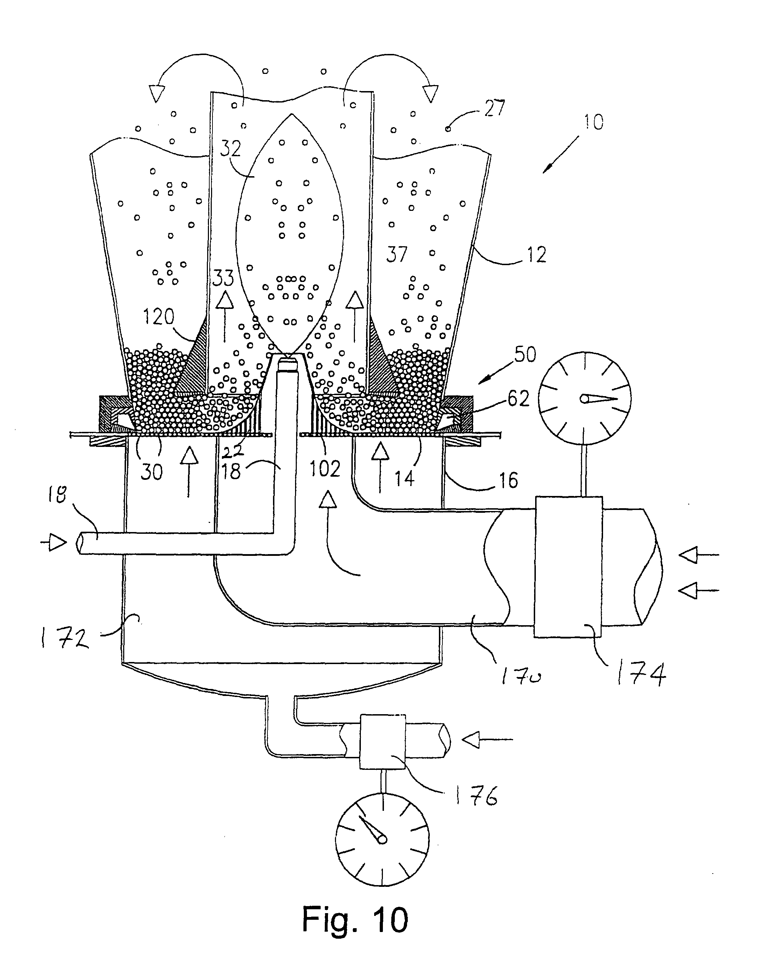

In Fig. 10 ist ein weiteres Ausführungsbeispiel der Vorrichtung zum Beschichten von Tabletten dargestellt, das im Gegensatz zu Fig. 1 eine geänderte Anordnung der Prozeßgaszuführung aufweist. Wie zu erkennen ist, ist der Anströmkanal in zwei Teilkanäle unterteilt, einem Mittelkanal 170 und einem Außenringkanal 172. Der Mittelkanal 170 dient zur Zuführung des Prozeßgases in die Beschichtungszone 33, d.h. er ist an dem Anströmboden 14 im Bereich der Düsenrampe 22 angeordnet. Der Mittelkanal 170 ist mit einer geeigneten Gasquelle (Druckgasquelle oder Gebläse) verbunden und umfaßt eine Meßvorrichtung 174 zur Messung der Geschwindigkeit, des Drucks, des Gasvolumens, der Feuchtigkeit und/oder der Temperatur des in die Beschichtungszone 33 geleiteten Prozeßgases. Die Meßvorrichtung ist mit der nicht dargestellten Gasquelle verbunden, so daß ein Gasstrom mit geeigneten Strömungseigenschaften erzielt und aufrecht erhalten werden kann unter Verwendung von bekannten Steuer- und Regeleinrichtungen.

In ähnlicher Weise ist auch der Außenringkanal 172, der Prozeßgas zur Steuerung der Wirbelbetteigenschaften der Rückführzone 37 im Bereich derselben zuführt, mit einer Gasquelle (nicht dargestellt) verbunden, wobei ebenfalls eine Meßeinrichtung 176 die oben erwähnten Parameter mißt. Unabhängig davon kann über ein, gleichfalls nicht dargestelltes, Steuer- und Regelsystem der zugeführte Gasstrom eingestellt werden.

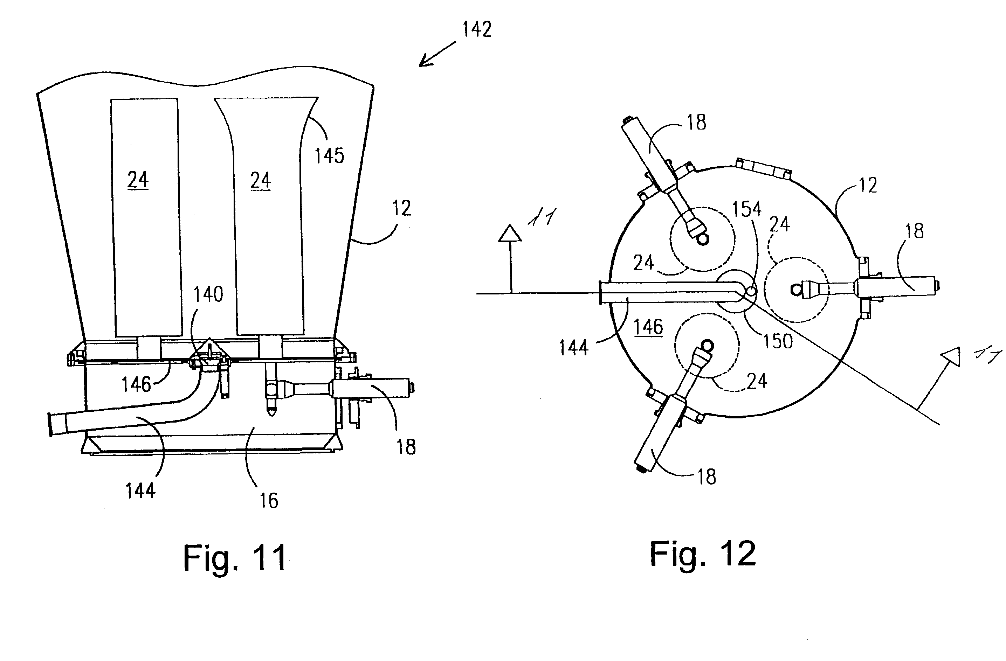

In den Fign. 11 und 12 ist ein weiteres Ausführungsbeispiel dargestellt, bei dem zur Erhöhung des Wirkungsgrad in einem Behälter 12 mehrere, im Ausführungsbeispiel 3 Stützrohre 24 angeordnet sind. Die Stützrohre sind in gleichem Abstand zueinander innerhalb des Behälters vorgesehen, wobei auch eine höhere Anzahl von Stützrohren gewählt werden kann. In der Beschichtungsvorrichtung 142 nach Fig. 11 ist beispielhaft auch eine Ausführungsform des Stützrohres 24 mit einem aufgeweiteten trompetenförmigen Ende 145 dargestellt, das selbstverständlich auch in den zuvor beschriebenen Ausführungsbeispielen verwendet werden kann. Gegebenenfalls kann die Aufweitung auch früher, d.h. in kleinerer Höhe des Stützrohres 24, beginnen. Die in den Fign. 1 bis 10 beschriebenen Elemente sind auch in dieser Beschichtungsvorrichtung 142 vorgesehen, sind aber der Klarheit wegen hier nicht weiter ausgeführt.

In Fig. 11 und 12 ist eine verbesserte Austragvorrichtung vorgesehen, die ein schonendes und kontaminationsfreies Austragen ermöglicht. Im Stand der Technik wird üblicherweise der Anströmkanal 16 zusammen mit dem Anströmboden 14 abgeklappt und die gesamte Ladung wird in einen Behälter geschüttet. Hierbei können wiederum die Tabletten Schaden nehmen und darüber hinaus sind die ausströmenden Prozeßgase nicht immer ohne Probleme. Auch besteht die Gefahr der Kontamination der Prozeßumgebung und der Bedienpersonen durch Staub und Abrieb des Produktes. Daher wird entsprechend der Erfindung ein geschlossenes Austragsystem vorgesehen.

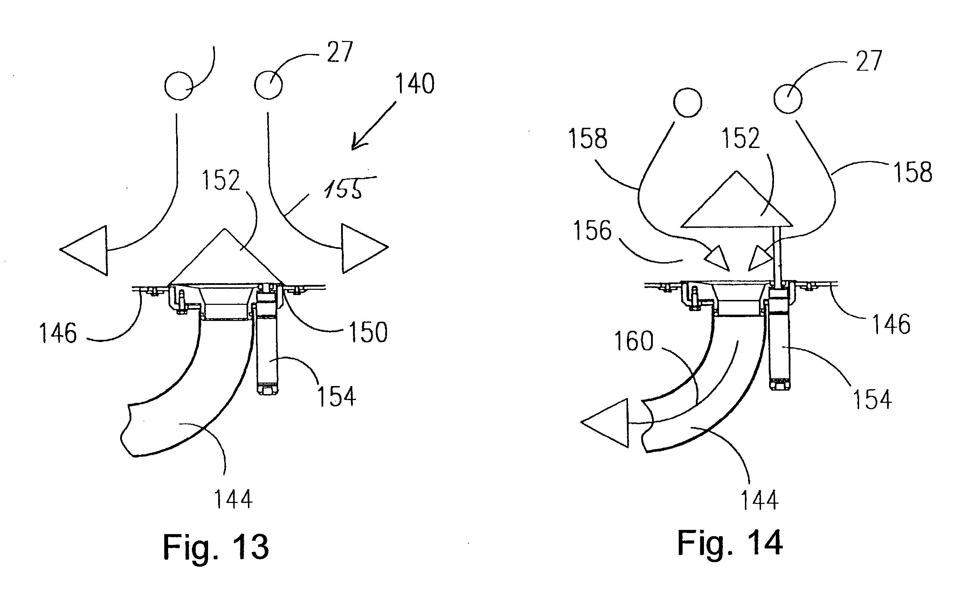

Die Austragvorrichtung weist einen Austragkanal 144 auf, der sich von der Mitte des Anströmbodens 146 zu einem entfernt liegenden Ort erstreckt. Der Anströmboden 146 ist ähnlich dem oben beschriebenen Anströmboden 14, mit der Ausnahme, daß er für drei Düsen 18 entworfen ist, die in einem Winkel von 120° zueinander angeordnet sind und daher drei große Durchgangsöffnungen für die Düsen aufweist. Der Anströmboden 146 weist eine mittlere Austragöffnung 150 auf, in der der Austragkanal 144 aufgenommen ist, wie genauer in den Fign. 13 und 14 dargestellt ist. Eine kegelförmige Kanalabdeckung 152 ist bewegbar über dem Anströmboden 146 in Ausrichtung zu der mittleren Austragöffnung 150 angeordnet. Die kegelförmige Kanalabdeckung 152 ist mit der Spitze nach oben angeordnet und zwischen zwei Stellungen bewegbar, einer abgedichteten Stellung entsprechend Fig. 13 und einer offenen Stellung entsprechend Fig. 14. Eine Betätigungsvorrichtung 154 ist mit der Abdeckung 152 verbunden und verschiebt diese zwischen den zwei Stellungen.

Wenn die Kanalabdeckung 152 geschlossen ist, verbleiben die Tabletten 27 in dem Behälter und können in weiter oben beschriebener Weise beschichtet werden, was durch die Pfeile 155 angedeutet ist. Die konische Abdeckung 152 dient dabei als Aufteilelement, das die Tabletten 27 der gemeinsamen Rückführzone auf die drei Stützrohre 24 verteilt.

Wenn der Beschichtungsprozeß beendet ist, wird die Betätigungsvorrichtung 154 aktiviert, wodurch sich die Abdeckung 152 vertikal nach oben hebt und eine Lücke 156 zwischen dem Umfang der Austragöffnung 150 und dem Umfang der Abdeckung 152 gebildet wird. Dadurch können die Tabletten in den Austragkanal 144 gesaugt werden, wie durch die Pfeile 158 in Fig. 14 angedeutet ist, wenn sie weiterhin in der Beschichtungsvorrichtung 142 zwischen Beschichtungszone und Rückführzone zirkulieren. Die Tabletten werden vorzugsweise unter Verwendung einer Druckdifferenz zwischen dem Behälter 12 und dem Austragkanal in diesen gesaugt. In dem Ausführungsbeispiel ist die Austragöffnung in der Mitte angeordnet, selbstverständlich kann sie auch an anderer Stelle vorgesehen sein, insbesondere bei anderen Anordnungen der Beschichtungsvorrichtung.

Der Austragkanal 144 kann auch bei der Reinigung der Beschichtungsvorrichtung zum Austragen von größeren verbleibenden Partikeln dienen. Beispielsweise kann Reinigungsflüssigkeit unter hohem Druck durch die Mittel zur Zuführung von Stützgas, d.h. über die Stützgaszufuhrvorrichtung 50 in den Behälter eingespritzt werden, wodurch größere Partikel in die Mitte der Vorrichtung gezwungen werden und über den Austragkanal 144 ausgetragen werden können.

## Patentansprüche

1. Vorrichtung zum Beschichten von Partikeln mit einem Behälter, der einen gelochten Anströmboden aufweist, durch den von unten nach oben strömendes Prozeßgas zuführbar ist, mit mindestens einem mit Abstand zum Anströmboden in dem Behälter angeordneten Steigrohr, das mit seinem oberen Ende zum Behälter offen ist, und in dessen unteres Ende eine Sprühdüse zum Einsprühen von Beschichtungsmaterial in das Steigrohr gerichtet ist, wobei innerhalb des Steigrohres eine Beschichtungszone und außerhalb des Steigrohres eine Rückführzone gebildet wird, und die Partikel unter Einwirkung des Prozeßgases und des Sprühstrahles des Beschichtungsmaterials von unten nach oben durch die Beschichtungszone geführt werden und in der Rückführzone unter Einwirkung der Schwerkraft von oben nach unten strömen und über einen Spalt in die Beschichtungszone zurückgeleitet werden,
**dadurch gekennzeichnet,**
**daß** in oder an dem Behälter (12) in der Nähe des gelochten Anströmbodens (14) Mittel zur Stützgaszufuhr (50) vorgesehen sind, die einen Stützgasstrom mit mindestens einer seitlich von außen nach innen gerichteter Strömungskomponente in Richtung des Spaltes zur Bildung einer Gasgleitschicht und zum Transport der Partikel (27) zwischen der Rückführzone (37) und der Beschichtungszone (33) in einem gerichteten Partikelfluß einleiten,
und **daß** Mittel (22,52,120)zum konstruktiven Ausformen im unteren Bereich des Behälters (12) angeordnet sind, die einen Übergangskanal zwischen Rückführzone (37) und Beschichtungszone (33) mit im Wesentlichen stetigen Begrenzungsflächen bilden,
wobei die Mittel zur Stützgaszufuhr und die Mittel zum konstruktiven Ausformen die Partikel zwischen der Rückführzone und der Beschichtungszone in einen gerichteten Partikelfluß führen.

2. Vorrichtung nach Anspruch 1, **dadurch gekennzeichnet, daß** die Mittel zur Stützgaszufuhr einen weiteren Stützgasstrom in den Übergangskanal einleiten, der um die Sprühdüse(18) herum vom Anströmboden (14) aus gesehen an Stellen mit unterschiedlicher Höhe zugeführt wird, wobei die Höhe der Stellen von außen nach innen zunimmt, derart, daß eine schräge oder bogenförmige Gasgleitschicht gebildet wird.

3. Vorrichtung nach Anspruch 2, **dadurch gekennzeichnet, daß** die Mittel zum konstruktiven Ausformen einen rampenförmigen Körper (22) aufweisen, der auf dem Anströmboden (14) mittig angeordnet ist und der von außen nach innen ansteigt.

4. Vorrichtung nach Anspruch 3, **dadurch gekennzeichnet, daß** die rampenförmige Umfangsfläche (114) des Körpers (22,102) perforiert ist und das durch den Anströmboden (14) strömende Prozeßgas (15) als Stützgasstrom zur Bildung der schrägen oder bogenförmigen Gasgleitschicht an unterschiedlichen Stellen der rampenförmigen Umfangsfläche (114) austritt.

5. Vorrichtung nach einem der Ansprüche 2 bis 4, **dadurch gekennzeichnet, daß** die Mittel zum konstruktiven Ausformen einen an dem äußeren Umfang des unteren Endes des Steigrohres (24) vorgesehenen Ansatz (120) mit in Strömungsrichtung der Partikel geneigter Umfangsfläche zur Bildung einer Ablenkfläche aufweisen.

6. Vorrichtung nach Anspruch 5, **dadurch gekennzeichnet, daß** der Ansatz (120) in seinem dem Anströmboden (14) zugewandten Bereich eine im Wesentlichen horizontale oder in Richtung der Beschichtungszone geneigte oder eine bogenförmige Leitfläche (126,127) aufweist, derart, daß die in der Rückführzone (37) nach unten strömenden und von der Ablenkfläche (122) nach außen abgelenkten Partikel durch die Leitfläche (126,127) in Richtung der Beschichtungszone (33) geleitet werden.

7. Vorrichtung nach Anspruch 5 oder Anspruch 6, **dadurch gekennzeichnet, daß** der Ansatz konisch und eine Neigung zur Vertikalen zwischen 1° und 50°, vorzugsweise 10° bis 35° aufweist.

8. Vorrichtung nach einem der Ansprüche 5 bis 7, **dadurch gekennzeichnet, daß** der Ansatz (120) im Querschnitt tropfenförmig ausgebildet ist.

9. Vorrichtung nach einem der Ansprüche 1 bis 8, **dadurch gekennzeichnet, daß** die Mittel zur Stützgaszufuhr den Stützgasstrom mit seitlich gerichteter Strömungskomponente über am unteren Ende des Behälters benachbart zum Anströmboden (14) angeordnete Einströmöffnungen (60) unter Druck einleiten.

10. Vorrichtung nach einem der Ansprüche 1 bis 9, **dadurch gekennzeichnet, daß** die Mittel zur Stützgaszufuhr eine Gasquelle und einem mit der Gasquelle in Verbindung stehenden Gaskanal (62) aufweisen, der um den Umfang des Behälters (12) herum, benachbart zu dem Anströmboden (14) angeordnet ist und der mit den Einströmöffnungen (60) in Verbindung steht.

11. Vorrichtung nach Anspruch 9 oder Anspruch 10, **dadurch gekennzeichnet, daß** die Einströmöffnungen (60) gleichmäßig um den Umfang des Behälters herum angeordnet sind oder als ringförmiger umfänglicher Einströmschlitz ausgebildet sind.

12. Vorrichtung nach einem der Ansprüche 9 bis 11, **dadurch gekennzeichnet, daß** der Bereich der Wand des Behälters, in dem die Einströmöffnungen (60) angebracht sind, schräg oder bogenförmig ist.

13. Vorrichtung nach Anspruch 11 oder Anspruch 12, **dadurch gekennzeichnet, daß** der Gaskanal (62) aus einem Kanalring (66) und einem Bodenabdichtring (68) besteht, wobei die Einströmöffnungen (60) zwischen dem Kanalring und dem Bodenabdichtring ausgebildet sind.

14. Vorrichtung nach einem der Ansprüche 1 bis 13, **dadurch gekennzeichnet, daß** der Anströmboden mit einem geteilten Anströmkanal für die Zufuhr von Prozeßgas verbunden ist, wobei ein erster Teilanströmkanal (170) mit der Beschichtungszone (33) ausgerichtet ist und ein zweiter Teilanströmkanal (172) mit der Rückführzone (37) ausgerichtet ist, derart, daß das Prozeßgas des ersten Teilanströmkanals in die Beschichtungszone und das Prozeßgas des zweiten Teilanströmkanals in die Rückführzone geleitet wird.

15. Vorrichtung nach Anspruch 14, **dadurch gekennzeichnet, daß** das in den zwei Teilanströmkanälen (170,172) geführte Prozeßgas jeweils unabhängig von einander einstellbar, überwachbar und regelbar ist.

16. Vorrichtung nach einem der Ansprüche 1 bis 15, **dadurch gekennzeichnet, daß** das Prozeßgas und das Stützgas von einer Gasquelle lieferbar sind.

17. Vorrichtung nach einem der Ansprüche 1 bis 14, **dadurch gekennzeichnet, daß** in dem Anströmboden (146) eine mit einem Austragkanal (144) verbundene Austragöffnung (150) zum Austragen der beschichteten Partikel vorgesehen ist, die mit einem zwischen einer geschlossenen und einer geöffneten Stellung bewegbaren Verschlußorgan (152) versehen ist.

## Claims

1. Device for the coating of particles with a container, whereby the same incorporates a perforated streaming floor through which the process gas, streaming from the underside to the upper side, is guided, with at least one ascending pipe positioned at a distance from the streaming floor within the container, whereby the former is open at its upper end in the direction of the container, and in the lower end of which a spray nozzle is located, for the spraying of coating material into the ascending pipe, whereby a coating zone is located within the ascending pipe, and whereby a returning zone is formed outside of the ascending pipe, and whereby the particles under the influence of the process gas and the spray jet of coating material are guided from the underside through the coating zone to the upper side, and whereby the same stream from the upper side to the underside under the influence of gravity within the returning zone, and then over a gap within the coating zone to be returned, **characterised in that** means for the support gas supply (50) are envisaged in or on the container (12) near the perforated streaming floor (14), whereby the same initiate a support gas stream with at least one streaming component directed from the outside and sideways towards the inside in the direction of the gap, for the formation of a gas glide layer, and for the transport of the particles (27) between the returning zone (37) and the coating zone (33) in the form of a directional particle flow, and **in that** the means (22, 52, 120) for the constructive forming are located within the lower section of the container (12), whereby the same form a transition channel between the returning zone (37) and the coating zone (33), with substantially constant limiting surfaces, whereby the means for the support gas supply and the means for the constructive forming of the particles between he returning zone and the coating zone result in a directional particle flow.

2. Device according to Claim 1, **characterised in that** the means for the support gas supply guide a further support gas stream into the transition channel, whereby the same is guided around the spray nozzle (18) when viewed from the direction of the streaming floor (14) in locations of varying height, whereby the height of these locations increases from the outside towards the inside in such a way that a diagonal or arced gas glide layer is formed.

3. Device according to Claim 2, **characterised in that** the means incorporates a ramp-shaped body (22) for the constructive forming, whereby the same is positioned centrally upon the streaming floor (14) and ascends from the outside towards the inside.

4. Device according to Claim 3, **characterised in that** the ramp-shaped circumferential surface (114) of the body (22, 102) is perforated, and **in that** the process gas (15) streaming through the streaming floor (14) exits at various locations of the ramp-shaped circumferential surface (114) in the form of a support gas stream for the forming of the diagonal or arced gas glide layer.

5. Device according to one of the preceding Claims 2 to 4, **characterised in that** the means for the constructive forming of a shoulder (120) with a circumferential surface inclined in the streaming direction of the particles is envisaged at the outer circumference of the lower end of the ascending pipe (24), for the forming of a deflection surface.

6. Device according to Claim 5, **characterised in that** the shoulder (120) incorporates a substantially horizontal guide surface (126, 127) within the section that faces towards the streaming floor (14), or one that is inclined in the direction of the coating zone, or one that is arced in such a way that the particles that stream in a downward direction within the returning zone (37) and that are deflected by the deflection surface (122) towards the outside are guided through the guide surface (126, 127) in the direction of the coating zone (33).

7. Device according to Claim 5 or Claim 6, **characterised in that** the shoulder is conical, and **in that** the same incorporates an incline towards the vertical of between 1° and 50°, and preferably of 10° to 35°.

8. Device according to one of the preceding Claims 5 to 7, **characterised in that** the cross-section of the shoulder (120) is formed in a drop-shaped way.

9. Device according to one of the preceding Claims 1 to 8, **characterised in that** the means for the support gas supply supplies the support gas stream under pressure with the aid of a streaming component that is directed towards the side over inlet streaming ports (60) located at the lower end of the container near the streaming floor (14).

10. Device according to one of the preceding Claims 1 to 9, **characterised in that** the means for the support gas supply incorporates a gas source and a gas channel (62) that is connected with the gas source, whereby the same is connected around the circumference of the container (12) near the streaming floor (14), and whereby the same is connected with the inlet streaming ports (60).

11. Device according to Claim 9 or Claim 10, **characterised in that** the inlet streaming ports (60) are positioned evenly around the circumference of the container, or **in that** the same take the form of a ring-shaped circumferential inlet streaming slot.

12. Device according to one of the preceding Claims 9 to 11, **characterised in that** the area of the wall of the container in which the inlet streaming ports (60) are located is of a diagonal or an arced form.

13. Device according to Claim 11 or Claim 12, **characterised in that** the gas channel (62) consists of a channel ring (66) and a floor sealing ring (68), whereby the inlet streaming ports (60) are formed between the channel ring and the floor sealing ring.

14. Device according to one of the preceding Claims 1 to 13, **characterised in that** the streaming floor is connected with a divided streaming channel, for the supply of process gas, whereby a first part streaming channel (170) is directed towards the coating zone (33), and whereby a second part streaming channel (172) is directed towards the returning zone (37) in such a way that the process gas of the first part streaming channel is guided into the coating zone, and that the process gas of the second part streaming channel is guided into the returning zone.

15. Device according to Claim 14, **characterised in that** the process gas conveyed within the two part streaming channels (170, 172) can be adjusted, monitored and controlled independently from each other.

16. Device according to one of the preceding Claims 1 to 15, **characterised in that** the process gas and the support gas can be supplied from a gas source.

17. Device according to one of the preceding Claims 1 to 14, **characterised in that** a removal port (150) for the removal of the coated particles is connected with a removal channel (144) and envisaged within the streaming floor (146), whereby the same is equipped with a closure organ (152) that can be moved between a closed and an open position.

## Revendications

1. Dispositif d'enrobage de particules comportant un réservoir, qui présente un fond de passage perforé par lequel on peut amener le gaz de traitement s'écoulant du bas vers le haut, comportant au moins une conduite montante de gaz disposée dans le réservoir en formant un écart avec le fond de passage et qui est ouverte vers le réservoir par son extrémité supérieure, et dans l'extrémité inférieure de laquelle est dirigée une buse de pulvérisation destinée à pulvériser du matériau de revêtement dans la conduite montante, une zone de revêtement étant formée à l'intérieur de la conduite montante de gaz et une zone de retour à l'extérieur de la conduite montante de gaz, et les particules, sous l'effet du gaz de traitement et du faisceau de pulvérisation du matériau d'enrobage, étant dirigées du bas vers le haut par la zone d'enrobage, puis s'écoulant du haut vers le bas dans la zone de retour sous l'effet de la gravité, et étant ramenées par une fente dans la zone d'enrobage,
**caractérisé en ce que** dans ou contre le réservoir (12), à proximité du fond de passage perforé (14) sont disposés des moyens d'amenée du gaz de support (50) qui introduisent un courant de gaz de support avec au moins une composante d'écoulement orientée latéralement de l'extérieur vers l'intérieur dans la direction de la fente afin de former une couche de glissement des gaz et de transporter les particules (27) entre la zone de retour (37) et la zone d'enrobage (33) selon un flux de particules orienté,
et **en ce que** des moyens (22, 52, 120) de façonnage constructif sont disposés dans la zone inférieure du réservoir (12), et forment un canal de transition entre la zone de retour (37) et la zone d'enrobage (33) avec des surfaces limites essentiellement régulières,
les moyens d'amenée du gaz de support et les moyens de façonnage constructif dirigeant les particules entre la zone de retour et la zone d'enrobage selon un flux de particules orienté.

2. Dispositif selon la revendication 1, **caractérisé en ce que** les moyens d'amenée du gaz de support introduisent un autre courant de gaz de support dans le canal de transition, lequel est dirigé autour de la buse de pulvérisation (18), vu depuis le fond de passage (14), au niveau d'emplacements de différentes hauteurs, la hauteur des emplacements augmentant depuis l'extérieur vers l'intérieur de façon telle qu'est formée une couche de glissement de gaz en diagonale ou en arc.

3. Dispositif selon la revendication 2, **caractérisé en ce que** les moyens de façonnage constructif présentent un corps (22) en forme de rampe qui est disposé sur le fond de passage (14) au niveau du milieu et qui augmente de l'extérieur vers l'intérieur.

4. Dispositif selon la revendication 3, **caractérisé en ce que** la surface périphérique en forme de rampe (114) du corps (22, 102) est perforée et que le gaz de traitement (15) s'écoulant par le fond de passage (14) sort en tant que courant de gaz de support pour former la couche de glissement de gaz en diagonale ou en arc au niveau des différents emplacements de la surface périphérique en forme de rampe (114).

5. Dispositif selon l'une des revendications 2 à 4, **caractérisé en ce que** les moyens de façonnage constructif présentent une saillie (120) prévue sur la périphérie extérieure de l'extrémité inférieure de la conduite montante de gaz (24), avec une surface périphérique inclinée dans la direction d'écoulement des particules pour former une surface de déviation.

6. Dispositif selon la revendication 5, **caractérisé en ce que** la saillie (120) présente, dans sa zone orientée vers le fond de passage (14), une surface directrice (126, 127) essentiellement horizontale ou inclinée dans la direction de la zone d'enrobage ou en forme d'arc de façon telle que les particules s'écoulant dans la zone de retour (37) vers le bas et déviées de la surface de déviation (122) vers l'extérieur, sont dirigées par la surface directrice (126, 127) dans la direction de la zone d'enrobage (33).

7. Dispositif selon la revendication 5 ou la revendication 6, **caractérisé en ce que** la saillie est conique et présente une inclinaison par rapport à la verticale comprise entre 1° et 50°, de préférence entre 10° et 35°.

8. Dispositif selon l'une des revendications 5 à 7, **caractérisé en ce que** la saillie (120) est conçue, en coupe transversale, essentiellement en forme de goutte.

9. Dispositif selon l'une des revendications 1 à 8, **caractérisé en ce que** les moyens d'amenée du gaz de support introduisent sous pression le courant de gaz de support avec une composante d'écoulement orientée latéralement par des ouvertures d'introduction (60) disposées au niveau de l'extrémité inférieure du réservoir à proximité du fond de passage (14).

10. Dispositif selon l'une des revendications 1 à 9, **caractérisé en ce que** les moyens d'amenée de gaz de support présentent une source de gaz et un canal de gaz (62) en relation avec la source de gaz, lequel est disposé autour de la périphérie du réservoir (12), à proximité du fond de passage (14) et se trouve en relation avec les ouvertures d'introduction (60).

11. Dispositif selon la revendication 9 ou la revendication 10, **caractérisé en ce que** les ouvertures d'introduction (60) sont disposées régulièrement sur la périphérie du réservoir ou sont conçues sous la forme d'une fente d'introduction périphérique annulaire.

12. Dispositif selon l'une des revendications 9 à 11, **caractérisé en ce que** la zone de la paroi du réservoir dans laquelle sont rapportées les ouvertures d'entrée (60) est en diagonale ou en arc.

13. Dispositif selon la revendication 11 ou la revendication 12, **caractérisé en ce que** le canal de gaz (62) se compose d'un canal annulaire (66) et d'une bague d'étanchéité inférieure (68), les ouvertures d'introduction (60) étant formées entre le canal annulaire et la bague d'étanchéité inférieure.

14. Dispositif selon l'une des revendications 1 à 13, **caractérisé en ce que** le fond de passage est relié à un canal de passage séparé pour l'amenée du gaz de traitement, un premier canal de passage séparé (170) étant équipé de la zone d'enrobage (33) et un second canal de passage séparé (172) étant équipé de la zone de retour (37) de sorte que le gaz de traitement du premier canal de passage séparé est dirigé dans la zone d'enrobage et le gaz de traitement du second canal de passage séparé est dirigé dans la zone de retour.

15. Dispositif selon la revendication 14, **caractérisé en ce que** chaque gaz de traitement amené dans les deux canaux de passage séparés (170, 172) peut être ajusté, surveillé et régulé indépendamment de l'autre.

16. Dispositif selon l'une des revendications 1 à 15, **caractérisé en ce que** le gaz de traitement et le gaz de support peuvent être fournis par une source de gaz.

17. Dispositif selon l'une des revendications 1 à 14, **caractérisé en ce que** dans le fond de passage (146) est prévue une ouverture de décharge (150) reliée à un canal de décharge (144) et destinée à évacuer les particules enrobées, laquelle ouverture est équipée d'un organe de fermeture (152) mobile entre une position fermée et une position ouverte.
